# EUROPÄISCHE PATENTANMELDUNG

(11) **EP 4 841 497 A1**
(43) Veröffentlichungstag der Anmeldung: **18.11.2026**
(21) Anmeldenummer: 26176388.2
(22) Anmeldetag: 05.05.2026
(51) Int. Cl.: G06F 40/30, G06F 40/35, G06Q 50/18, G06N 20/00, G10L 15/26

(54) **COMPUTERIMPLEMENTIERTES VERFAHREN ZUR UNTERSTÜTZUNG EINER MÜNDLICHEN VERHANDLUNG IN EINEM INTERAKTIVEN KOMMUNIKATIONSKONTEXT**

(30) Priorität: 12.05.2025 DE 102025118084
(71) Anmelder: FORBENCAP GmbH, 87527 Sonthofen (DE)
(72) Erfinder: Götz, Stefan, 85659 Forstern (DE)
(74) Vertreter: advotec.

(57) **Zusammenfassung**

Vorgeschlagen wird ein computerimplementiertes Verfahren zur Unterstützung einer mündlichen Verhandlung in einem interaktiven Kommunikationskontext durch ein maschinelles Lemmodell (1), insbesondere ein Sprachmodell (2), umfassend die Schritte: Bereitstellen von verhandlungsrelevanten Informationen (3), die eine Verhandlungshistorie eines bestimmten Falls abbilden; Erfassen und/oder Umwandeln einer Lifeeingabe (4) von verhandlungsbezogenen Informationselementen, insbesondere gesprochener Sprache, in Textdaten (5); semantisches Analysieren der Textdaten (5) durch Vergleich mit der bereitgestellten Verhandlungshistorie (3) und/oder einer Wissensdatenbank (6); Identifizieren von semantisch relevanten Abweichungen und/oder Kontextveränderungen (7) in der Lifeeingabe (4) von verhandlungsbezogenen Informationselementen und/oder den Textdaten (5); und Ausgeben eines Hinweises (8) auf die erkannten semantisch relevanten Abweichungen und/oder Kontextveränderungen (7) an einen Nutzer (9).

## Beschreibung

Die Erfindung betrifft das technische Gebiet der Unterstützung kommunikativer Abläufe in mündlichen Verhandlungen. Mündliche Verhandlungen stellen in zahlreichen professionellen Kontexten, insbesondere in vertraglichen, geschäftlichen, juristischen oder gerichtlichen Zusammenhängen, ein zentrales Instrument der Entscheidungsfindung und Interessenvertretung dar.

### Stand der Technik

Solche Verhandlungen sind häufig durch eine direkte Interaktion zwischen mehreren Parteien geprägt, in der komplexe Sachverhalte, rechtliche Positionen und strategische Zielsetzungen zur Sprache kommen.

Der Ablauf mündlicher Verhandlungen erfolgt in der Regel in Form eines strukturierten Dialogs, bei dem die beteiligten Parteien wechselseitig Standpunkte darstellen, Argumente austauschen, auf Vorbringen der Gegenseite reagieren und gegebenenfalls Vereinbarungen oder rechtlich verbindliche Entscheidungen herbeiführen. Dabei spielt nicht nur der gesprochene Inhalt eine Rolle, sondern auch dessen Einbettung in den Gesamtverlauf der Verhandlung, einschließlich früherer Aussagen, vorliegender Dokumente und bereits getroffener Feststellungen. Verhandlungen können sich über längere Zeiträume erstrecken, verschiedene Sach- und Rechtsfragen betreffen und in wechselnden Besetzungen stattfinden. Die beteiligten Personen sind gefordert, relevante Informationen kontinuierlich aufzunehmen, richtig einzuordnen, Widersprüche zu erkennen und angemessen auf neue Entwicklungen zu reagieren.

In diesem Zusammenhang entstehen besondere Anforderungen an die Aufmerksamkeit, das Erinnerungsvermögen und die Reaktionsfähigkeit der Verhandlungsteilnehmer. Missverständnisse, fehlerhafte Darstellungen oder taktisch motivierte Aussagen der Gegenseite können den Verlauf der Verhandlung beeinflussen, insbesondere wenn sie nicht unmittelbar erkannt oder hinterfragt werden. Eine systematische Auswertung und Einordnung der laufenden Gesprächsbeiträge im Lichte des bisherigen Verhandlungsverlaufs erfolgt bislang weitgehend manuell, durch individuelle Erfahrung, Mitschriften oder die Konsultation externer Unterlagen. Dies kann insbesondere bei umfangreichen und/oder mehrsprachigen Verfahren mit hoher Komplexität eine erhebliche kognitive Belastung darstellen und birgt das Risiko, dass relevante Abweichungen oder strategische Manöver der Gegenseite unbeachtet bleiben.

Es ist eine Aufgabe der Erfindung, ein Verfahren und/oder ein System anzugeben, das die vorliegenden Herausforderungen zumindest teilweise überwindet.

### Offenbarung der Erfindung

Die Aufgabe wird gelöst durch ein Verfahren gemäß den Merkmalen des Patentanspruchs 1. Die Aufgabe wird gelöst durch eine Vorrichtung gemäß den Merkmalen des Patentanspruchs 15.

Gemäß einem ersten Aspekt wird ein Verfahren zur Unterstützung einer mündlichen Verhandlung in einem interaktiven Kommunikationskontext durch ein maschinelles Lernmodell, insbesondere ein beispielsweise multimodales Sprachmodell, vorgeschlagen, umfassend die Schritte:
Bereitstellen von verhandlungsrelevanten Informationen, die eine Verhandlungshistorie eines bestimmten Falls abbilden;
Erfassen und/oder Umwandeln einer Lifeeingabe von verhandlungsbezogenen Informationselementen, insbesondere gesprochener Sprache, in Textdaten;
semantisches Analysieren der Textdaten durch Vergleich mit der bereitgestellten Verhandlungshistorie und/oder einer Wissensdatenbank;
Identifizieren von semantisch relevanten Abweichungen und/oder Kontextveränderungen in der Lifeeingabe von verhandlungsbezogenen Informationselementen und/oder den Textdaten; und
Ausgeben eines Hinweises auf die erkannten semantisch relevanten Abweichungen und/oder Kontextveränderungen an einen Nutzer.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Das Verfahren beginnt vorzugsweise mit dem Bereitstellen von verhandlungsrelevanten Informationen, die eine Verhandlungshistorie eines bestimmten Falls abbilden. Diese Informationen umfassen vorzugsweise frühere Aussagen, Dokumente, Gesprächsprotokolle und/oder sonstige fallbezogene Inhalte, die in strukturierter oder unstrukturierter Form vorliegen können. Der technische Vorteil besteht darin, dass das System durch diese Kontextdaten die laufende Verhandlung mit dem bisherigen Verlauf abgleichen und konsistente Schlussfolgerungen ziehen kann.

Die Formulierung "semantisch relevanten Abweichungen oder Kontextveränderungen" kann als semantische Inkonsistenzen und/oder als semantisch signifikante Divergenzen und/oder als inhaltlich relevante Kontextabweichungen und/oder als inhaltliche Diskrepanzen und/oder Erweiterungen und/oder als interpretationsrelevante Kontextabweichungen und/oder als abweichende und/oder ergänzende Kontextinformationen aufgefasst werden. Es sind von der Formulierung "semantisch relevanten Abweichungen oder Kontextveränderungen" insbesondere Widersprüche in einem Sachvortrag und/oder Sachverhalt und/oder auch inhaltliche Ergänzungen und/oder neue Positionierungen und/oder relevante Bezugnahmen und/oder neue Kontexte und/oder neue Aspekte und/oder semantisch relevante Erweiterungen und/oder Verweise auf externe Inhalte und/oder implizite Bedeutungsverschiebungen umfasst.

Anschließend wird vorzugsweise eine Lifeeingabe von verhandlungsbezogenen Informationselementen, insbesondere eine Spracheingabe, vorzugsweise gesprochene Sprache, erfasst und in Textdaten umgewandelt. Dies erfolgt vorzugsweise durch ein automatisches Spracherkennungssystem, das akustische Signale in digitalisierten Text überführt. Der technische Vorteil liegt darin, dass gesprochene Kommunikation automatisiert in eine maschinenverarbeitbare Form übertragen wird, ohne dass eine manuelle Transkription erforderlich ist, was Echtzeitverarbeitung ermöglicht.

Unter "gesprochener Sprache" ist vorliegend, eine sprachliche Information aus der laufenden oder auch zuvor aufgezeichneten Verhandlung zu verstehen. Es versteht sich, dass die vorliegende Analyse auch auf bereits zuvor stattgefundene und aufgezeichnete Verhandlungen angewandt werden kann. Das maschinelle Lernmodell kann vorzugsweise ein Sprachmodell umfassen.

Daraufhin erfolgt vorzugsweise eine semantische Analyse der Textdaten durch Vergleich mit der bereitgestellten Verhandlungshistorie und/oder einer Wissensdatenbank. Die semantische Analyse bezeichnet vorzugsweise die inhaltliche Interpretation und Bedeutungserschließung der Lifeeingabe von verhandlungsbezogenen Informationselementen, wobei Zusammenhänge, Referenzen und inhaltliche Übereinstimmungen identifiziert werden. Wissensdatenbanken enthalten vorzugsweise domänenspezifisches Hintergrundwissen, etwa aus juristischen Quellen oder Regelwerken. Der technische Vorteil besteht in einer kontextsensitiven Bewertung der aktuellen Aussagen, wodurch relevante Abweichungen oder Widersprüche erkannt werden können.

Im nächsten Schritt wird vorzugsweise geprüft, ob semantisch relevante Abweichungen und/oder Kontextveränderungen vorliegen. Eine semantische Inkonsistenz bezeichnet vorzugsweise eine logische oder inhaltliche Abweichung zwischen dem aktuellen Sprachinhalt und dem bekannten Kontext, etwa in Form von Widersprüchen, falschen Tatsachenbehauptungen oder Auslassungen. Vorzugsweise erfolgt diese Prüfung automatisiert auf Grundlage semantischer Ähnlichkeits- und Konsistenzmetriken. Der technische Vorteil liegt darin, dass die Aussagequalität überprüft und potenziell problematische Inhalte erkannt werden, ohne dass der Nutzer diese manuell verifizieren muss.

Ferner wird vorzugsweise ein Hinweis auf die erkannten semantisch relevanten Abweichungen und/oder Kontextveränderungen an den Nutzer ausgegeben. Diese Ausgabe kann vorzugsweise in textlicher oder visueller Form auf einem Anzeigegerät oder über eine Audioausgabe erfolgen. Dadurch wird dem Nutzer ermöglicht, unmittelbar auf erkannte Unstimmigkeiten zu reagieren. Der technische Vorteil besteht darin, dass potenziell fehlerhafte, irreführende oder manipulative Aussagen frühzeitig identifiziert und adressiert werden können, was die Effizienz und Sicherheit des Verhandlungsverlaufs verbessert.

Der Begriff "maschinelles Lernmodell" wird vorliegend auch als "Modell" abgekürzt.

In einem weiteren Aspekt wird vorgeschlagen, dass das Verfahren und/oder System vorzugsweise dazu eingesetzt wird, in einer laufenden mündlichen Verhandlung sprachlich geäußerte Änderungswünsche und/oder Neuanträge zu erkennen und deren Bedeutung im Kontext der bisherigen Verhandlungshistorie zu analysieren. Solche Änderungsanliegen können sich vorzugsweise aus expliziten Formulierungen wie "Wir möchten dies anders geregelt haben." oder impliziten Aussagen mit modifizierendem Charakter ergeben, wobei das Modell vorzugsweise semantische Marker, tonale Muster sowie syntaktische Abweichungen zur Identifikation verwendet.

Ein solcher Änderungswunsch wird vorzugsweise als "semantische Inkonsistenz" gewertet, sofern er inhaltlich mit zuvor getroffenen Aussagen, bestehenden Einigungen und/oder dokumentierten Positionen in Widerspruch steht oder eine neue Richtung einleitet. Vorzugsweise erzeugt das Modell in diesen Fällen automatisch einen Hinweis, der den Änderungswunsch als solchen identifiziert, inhaltlich einordnet und/oder mit der bisherigen Argumentations- und Entscheidungsstruktur abgleicht.

Besonders vorteilhaft ist eine Ausgestaltung, bei der das Modell bei Erkennung eines Änderungswunsches vorzugsweise einen konkreten Anpassungsvorschlag generiert. Dieser Vorschlag kann sich insbesondere auf einen bestehenden Vertragsentwurf beziehen, wobei das System vorzugsweise in der Lage ist, die gewünschte Änderung so in die Vertragsstruktur einzubetten, dass alle vertragsinternen Rückbezüge, Querverweise, Klauselverknüpfungen und/oder Interdependenzen berücksichtigt werden. Hierzu wird vorzugsweise eine interne Repräsentation des Vertrags als semantisch verknüpftes Regelwerk genutzt, das die Beziehungsstruktur zwischen den einzelnen Vertragsbestandteilen abbildet.

In ähnlicher Weise wird in einem weiteren Aspekt vorgeschlagen, dass das Modell auch bei der Erkennung eines geänderten Einigungsvorschlags und/oder der Abänderung eines bereits vorliegenden Gutachtens aktiv wird. Vorzugsweise erkennt das System Aussagen, die auf eine Neubewertung oder einen Abänderungswunsch hindeuten, etwa durch Formulierungen wie "unter der Voraussetzung, dass..." oder "wenn wir diesen Punkt anders bewerten...". In solchen Fällen erstellt das Modell vorzugsweise eine Analyse der betroffenen Elemente, identifiziert die divergierenden Inhalte und schlägt, unter Berücksichtigung der bisherigen Einlassungen, eine konsistente Anpassung und/oder Kommentierung vor. Dies ermöglicht es den Beteiligten, proaktiv und strukturiert auf neue Argumentationslinien oder Beweismittel einzugehen, ohne dabei in Widerspruch zur Gesamtlogik des bisherigen Verhandlungsverlaufs zu geraten.

Durch die Einbindung dieser dynamischen Änderungs- und Reaktionsfähigkeit lässt sich das Verfahren und/oder System vorzugsweise als kognitives Assistenzwerkzeug nutzen, das sowohl die Integrität als auch die Nachvollziehbarkeit komplexer Aushandlungsprozesse in Echtzeit unterstützt.

In einem weiteren Aspekt wird vorgeschlagen, dass das Verfahren und/oder System vorzugsweise sowohl bei Präsenzverhandlungen als auch bei nicht-präsenzgebundenen Verhandlungen, wie etwa Videokonferenzen oder Telefonverhandlungen, eingesetzt werden kann. Während in Präsenzsituationen zusätzliche Signale wie Körpersprache oder nonverbale Dynamiken ergänzend analysiert werden können, liegt der besondere Vorteil des Verfahrens und/oder Systems bei nicht-präsenzgebundenen Formaten vorzugsweise darin, dass es semantische Feinheiten, implizite Bedeutungsverschiebungen und/oder strategisch mehrdeutige Aussagen automatisiert erkennt - also gewissermaßen "zwischen den Zeilen liest". Dadurch wird dem Nutzer auch in rein auditiven und ggf. schriftlichdialogischen Konstellationen eine Ebene des situativen Verstehens zugänglich gemacht, die ohne visuelle oder direkte menschliche Rückkopplung häufig unvollständig bleibt.

In einem weiteren Aspekt wird vorgeschlagen, dass das maschinelle Lernmodell auf externe Wissensquellen, insbesondere juristische Datenbanken, Rechtsprechung und/oder Kommentarliteratur zugreift, vorzugsweise über Retrieval-Augmented Generation (RAG).

Das maschinelle Lernmodell greift vorzugsweise auf externe Wissensquellen zu, um die Qualität der Analyse und Interpretation von Lifeeingaben bzw. Spracheingaben zu verbessern. Externe Wissensquellen bestehen vorzugsweise aus juristischen Datenbanken, Sammlungen von Gerichtsurteilen oder Kommentarliteratur, die umfangreiches Fachwissen und Regelwerke enthalten. Diese Informationen stehen vorzugsweise über digitale Schnittstellen abrufbar bereit. Das Modell nutzt vorzugsweise Retrieval-Augmented Generation, wobei ein externer Wissensspeicher nach relevanten Inhalten durchsucht wird, die dann mit der Eingabe kombiniert und verarbeitet werden. Diese Technik ermöglicht es, auch außerhalb des Trainingskorpus liegendes Wissen situationsspezifisch verfügbar zu machen, was zu einer erhöhten Aussagepräzision führt und die Einordnung von Lifeeingaben und/oder Spracheingaben im jeweiligen Fachkontext erleichtert.

In einem weiteren Aspekt wird vorgeschlagen, dass das maschinelle Lernmodell unterschiedliche Eingabedatenformate zur Beschreibung der Verhandlungshistorie verarbeitet, insbesondere unstrukturierte und/oder strukturierte Textdaten und/oder Audiodaten und/oder Videodaten und/oder Bilddaten und/oder numerische Daten.

Das Modell ist vorzugsweise in der Lage, unterschiedliche Datenformate zu verarbeiten, die zur Beschreibung der Verhandlungshistorie verwendet werden. Hierzu zählen vorzugsweise unstrukturierte Textdaten wie Schriftsätze oder Gesprächsnotizen, strukturierte Daten wie Metadaten oder Tabellen, Audiodaten aus Tonaufnahmen, Videodaten von Verhandlungsmitschnitten, Bilddaten wie eingescannte Dokumente sowie numerische Daten etwa zur Darstellung quantitativer Sachverhalte. Durch diese Multiformatfähigkeit wird die Eingabebasis wesentlich erweitert, wodurch eine umfassendere und realitätsnähere Kontextverarbeitung möglich ist. Die Fähigkeit zur Verarbeitung heterogener Daten trägt dazu bei, alle relevanten Informationen unabhängig von ihrer Darstellungsform in die Analyse einzubeziehen und Informationsverluste zu vermeiden.

In einem weiteren Aspekt wird vorgeschlagen, dass die Verarbeitung der unterschiedlichen Eingabedaten durch spezialisierte Subkomponenten des maschinellen Lernmodells erfolgt, die jeweils auf bestimmte Datenarten trainiert und/oder auf die Verarbeitung bestimmter Datenarten spezialisiert sind.

Die Verarbeitung der verschiedenen Eingabeformate erfolgt vorzugsweise durch spezialisierte Subkomponenten innerhalb des Modells, die jeweils für bestimmte Datenarten optimiert sind. Eine Subkomponente ist vorzugsweise ein Teilmodell oder eine Verarbeitungseinheit, die gezielt für eine Klasse von Daten, etwa Audio oder Text, trainiert wurde. Jede Subkomponente kann dabei eigene Gewichtungen, Vorverarbeitungsschritte oder Architekturmerkmale aufweisen. Durch die Spezialisierung dieser Einheiten werden Genauigkeit, Effizienz und Robustheit der Datenverarbeitung deutlich gesteigert. Die modulare Verarbeitung ermöglicht zudem eine parallele Auswertung der Datenarten sowie eine gezielte Wartung oder Erweiterung einzelner Komponenten, ohne das Gesamtsystem zu beeinträchtigen.

In einem weiteren Aspekt wird vorgeschlagen, dass das maschinelle Lernmodell als Expertenmodell mit verschiedenen modellinternen Abschnitten aufgebaut ist, die jeweils auf bestimmte Fachgebiete spezialisiert sind.

Das maschinelle Lernmodell ist vorzugsweise als Expertenmodell aufgebaut, das intern in mehrere spezialisierte Abschnitte gegliedert ist. Jeder dieser Abschnitte ist vorzugsweise auf ein bestimmtes Fachgebiet oder eine inhaltliche Teilaufgabe spezialisiert, etwa Vertragsrecht, Beweiswürdigung oder strategische Verhandlungsführung. Ein solches Expertenmodell ist vorzugsweise modular aufgebaut und erlaubt eine gezielte Optimierung einzelner Funktionsbereiche. Dadurch wird eine höhere Präzision bei der Verarbeitung domänenspezifischer Inhalte erreicht, während gleichzeitig die Flexibilität des Gesamtsystems erhalten bleibt. Zudem lassen sich neue Expertenabschnitte vorzugsweise leicht ergänzen oder bestehende gezielt aktualisieren.

In einem weiteren Aspekt wird vorgeschlagen, dass das maschinelle Lernmodell eine mehrsprachige Spracheingabe verarbeitet, wobei insbesondere Übersetzungsfehler und/oder Syntaxfehler erkannt und kompensiert werden.

Das maschinelle Lernmodell ist vorzugsweise in der Lage, Spracheingaben in mehreren Sprachen zu verarbeiten. Hierbei kann es sich vorzugsweise um gesprochene oder geschriebene Sprache handeln, die durch automatische Übersetzung oder sprachspezifische Analysemodelle erkannt und analysiert wird. Die mehrsprachige Verarbeitung umfasst vorzugsweise auch die Erkennung und Kompensation von Übersetzungsfehlern und Syntaxabweichungen, die etwa bei simultaner Übersetzung oder bei nicht-muttersprachlicher Ausdrucksweise auftreten können. Diese Fähigkeit erhöht die Einsatzfähigkeit des Systems in internationalen oder mehrsprachigen Verhandlungssituationen und reduziert das Risiko falscher Interpretationen aufgrund sprachlicher Missverständnisse.

In einem weiteren Aspekt wird vorgeschlagen, dass das maschinelle Lernmodell den Hinweis auf die erkannten semantisch relevanten Abweichungen und/oder Kontextveränderungen in Form einer konkreten Handlungsempfehlung für eine Erwiderung auf die Inkonsistenz generiert, insbesondere durch Bewertung eines identifizierten Fehlverhaltens und Generierung einer semantisch konsistenten und/oder darauf abgestimmten Gegenargumentation.

Die Hinweise, die das maschinelle Lernmodell auf erkannte semantisch relevante Abweichungen und/oder Kontextveränderungen ausgibt, werden vorzugsweise in Form konkreter Handlungsempfehlungen für eine mögliche Erwiderung formuliert. Diese Empfehlungen beruhen vorzugsweise auf einer Bewertung der erkannten Abweichung oder des identifizierten Fehlverhaltens und beinhalten eine Gegenargumentation, die inhaltlich auf den ursprünglichen Beitrag abgestimmt ist. Eine solche Gegenargumentation ist vorzugsweise semantisch konsistent, d. h. sie steht im Einklang mit der Verhandlungshistorie und dem Gesamtzusammenhang. Dies ermöglicht eine fundierte und situationsgerechte Reaktion des Nutzers, ohne dass dieser eigenständig komplexe Analysen durchführen muss.

In einem weiteren Aspekt wird vorgeschlagen, dass die Handlungsempfehlung mit einer Begründung versehen ist, die sich auf die Verhandlungshistorie und/oder externe Wissensquellen stützt.

Die Handlungsempfehlung wird vorzugsweise mit einer Begründung versehen, die dem Nutzer die Einschätzung und Nachvollziehbarkeit des Vorschlags erleichtert. Diese Begründung stützt sich vorzugsweise auf Inhalte der Verhandlungshistorie und/oder auf externe Wissensquellen wie Urteile oder Literaturstellen. Die Begründung wird dabei vorzugsweise so aufbereitet, dass sie logisch nachvollziehbar ist und eine argumentative Grundlage für die Entscheidungsfindung oder Reaktion in der Verhandlung bietet. Dadurch wird die Qualität und Akzeptanz der vom System vorgeschlagenen Erwiderung erhöht, insbesondere bei komplexen oder strittigen Aussagen.

In einem weiteren Aspekt wird vorgeschlagen, dass das maschinelle Lernmodell unter Einhaltung datenschutzrechtlicher Bestimmungen, insbesondere der DSGVO, betrieben wird, und wobei die technische Umsetzung der Vertraulichkeit insbesondere folgende Maßnahmen umfasst: Verarbeitung sämtlicher verhandlungsrelevanter Daten ausschließlich auf lokal betriebenen Geräten oder in einer zertifizierten, DSGVO-konformen Cloud-Umgebung mit Ende-zu-Ende-Verschlüsselung; Einsatz von rollenbasierten Zugriffskontrollen zur Beschränkung des Datenzugriffs auf berechtigte Benutzergruppen; automatisierte Protokollierung aller Zugriffs- und Verarbeitungsaktivitäten in einem nicht manipulierbaren Audit-Log zur Nachvollziehbarkeit und Kontrolle durch autorisierte Prüfinstanzen; Pseudonymisierung und/oder Anonymisierung personenbezogener Daten vor Modellverarbeitung zur Minimierung der personenbezogenen Datenverwendung; Implementierung eines Löschkonzepts gemäß Art. 17 DSGVO mit definierten Löschfristen und technisch kontrollierbaren Datenlebenszyklen; Verwendung technischer Schutzmaßnahmen bei der Verarbeitung sensibler Informationen.

Das maschinelle Lernmodell wird vorzugsweise so betrieben, dass es die geltenden datenschutzrechtlichen Vorgaben, insbesondere die Bestimmungen der DSGVO, vollständig einhält. Die Datenverarbeitung erfolgt vorzugsweise ausschließlich auf lokal betriebenen Geräten oder innerhalb einer zertifizierten Cloud-Umgebung, die die Anforderungen an Ende-zu-Ende-Verschlüsselung erfüllt, wobei AES-256 oder vergleichbare Verfahren zum Einsatz kommen. Zugriffskontrollen werden vorzugsweise nach dem Prinzip der rollenbasierten Zugriffssteuerung (RBAC) umgesetzt, um sicherzustellen, dass nur autorisierte Personen bestimmte Daten einsehen oder verarbeiten können. Aktivitäten wie Datenzugriffe oder Modellanfragen werden vorzugsweise automatisiert in einem manipulationssicheren Audit-Log protokolliert, wodurch eine vollständige Nachvollziehbarkeit entsteht. Personenbezogene Daten werden vorzugsweise pseudonymisiert oder anonymisiert, bevor sie verarbeitet werden, um das Risiko der Rückverfolgbarkeit zu minimieren. Ein Löschkonzept wird vorzugsweise technisch so implementiert, dass Daten gemäß Art. 17 DSGVO systematisch gelöscht oder unzugänglich gemacht werden, sobald sie nicht mehr erforderlich sind. Zusätzlich können bei besonders sensiblen Informationen Schutzmechanismen wie Trusted Execution Environments oder homomorphe Verschlüsselung eingesetzt werden, um den Zugriff während der Verarbeitung zu sichern. Diese Maßnahmen verbessern die Datenhoheit, minimieren Missbrauchsrisiken und ermöglichen den Einsatz des Modells in hochsensiblen Kontexten.

In einem weiteren Aspekt wird vorgeschlagen, dass das Modell so ausgebildet ist, dass es in Echtzeit während einer mündlichen Verhandlung arbeitet und laufend neue gesprochene Beiträge analysiert und, insbesondere fortlaufend oder intervallweise, Hinweise auf die erkannten semantisch relevanten Abweichungen und/oder Kontextveränderungen ausgibt.

Das maschinelle Lernmodell wird vorzugsweise so ausgestaltet, dass es in Echtzeit während einer laufenden mündlichen Verhandlung arbeitet. Eingehende Spracheingaben werden vorzugsweise sofort oder in kurzen zeitlichen Intervallen erfasst, analysiert und mit vorhandenen Informationen abgeglichen. Die Ausgabe erfolgt vorzugsweise ebenfalls kontinuierlich oder zeitnah in Form von Hinweisen auf erkannte semantisch relevante Abweichungen und/oder Kontextveränderungen . Dadurch kann der Nutzer unmittelbar auf fehlerhafte oder strategisch problematische Aussagen reagieren. Die Fähigkeit zur Echtzeitverarbeitung setzt vorzugsweise eine effiziente und latenzarme Architektur voraus, bei der Analyse und Ausgabe parallelisiert oder gepuffert ablaufen. Dies reduziert Verzögerungen, erhöht die Reaktionsgeschwindigkeit und unterstützt dynamische Verhandlungssituationen.

In einem weiteren Aspekt wird vorgeschlagen, dass der interaktive Kommunikationskontext ein vertragliches, geschäftliches, juristisches und/oder gerichtliches Umfeld umfasst.

Der interaktive Kommunikationskontext, in dem das Verfahren eingesetzt wird, umfasst vorzugsweise vertragliche, geschäftliche, juristische und/oder gerichtliche Umfelder. Solche Kontexte sind typischerweise durch formalisierte Sprache, komplexe Sachverhalte und klare Entscheidungsstrukturen geprägt. Vorzugsweise erfordert jede dieser Umgebungen eine besondere Sorgfalt im Umgang mit Aussagen, Dokumenten und Beweismitteln, weshalb eine kontinuierliche inhaltliche Überprüfung durch ein Analysemodell hilfreich ist. Der Einsatz des Modells in diesen Bereichen ermöglicht es, Kommunikationsrisiken frühzeitig zu erkennen und argumentativ fundierte Entscheidungen zu unterstützen.

In einem weiteren Aspekt wird vorgeschlagen, dass die semantisch relevanten Abweichungen und/oder Kontextveränderungen Unstimmigkeiten, faktische Fehler, Täuschungsversuche und/oder strategisch-taktisches Verhalten des Gegenübers umfassen.

Semantisch relevante Abweichungen und/oder Kontextveränderungen umfassen vorzugsweise Unstimmigkeiten im Sinngehalt, faktische Fehler, Täuschungsversuche oder strategisch-taktisches Verhalten seitens des Gesprächspartners. Eine Unstimmigkeit bezeichnet vorzugsweise einen Widerspruch zu früheren Aussagen oder bekannten Informationen. Faktische Fehler beziehen sich vorzugsweise auf nachweislich unzutreffende Angaben, etwa inkorrekte Daten oder Ereignisse. Täuschungsversuche beinhalten vorzugsweise absichtliche Fehldarstellungen mit dem Ziel, das Gegenüber irrezuführen. Strategisch-taktisches Verhalten meint vorzugsweise manipulative Rhetorik oder selektive Darstellung zum eigenen Vorteil. Die Erkennung dieser Kategorien durch das Modell ermöglicht es, die Glaubwürdigkeit und strategische Wirkung der Aussagen laufend zu bewerten und dem Nutzer gezielte Hinweise für die Reaktion zu geben.

Gemäß einem zweiten Aspekt wird eine Vorrichtung zur Unterstützung einer mündlichen Verhandlung in einem interaktiven Kommunikationskontext vorgeschlagen, umfassend:
eine Datenverarbeitungseinheit mit einem maschinellen Lernmodell, insbesondere einem beispielsweise multimodalen Sprachmodell, das konfiguriert ist zur Durchführung eines Verfahrens gemäß einem der zuvor genannten Aspekte;
mindestens eine Schnittstelle zur Eingabe einer Lifeeingabe von verhandlungsbezogenen Informationselementen und zur Bereitstellung verhandlungsrelevanter Daten;
sowie eine Ausgabeeinheit zur Darstellung der analysierten Informationen, insbesondere der erkannten semantisch relevanten Abweichungen und/oder Kontextveränderungen und gegebenenfalls einer Handlungsempfehlung.

Der Begriff "Einheit" ist vorzugsweise ein funktionales Modul, das ggf. als technisch abgegrenzte, vorzugsweise in sich geschlossene Komponente innerhalb einer Vorrichtung oder eines Systems umfasst sein kann. Eine solche Einheit kann vorzugsweise hardwareseitig, etwa als physisch greifbares Bauelement wie ein Steuergerät, Sensor, Mikrocontroller oder ein integrierter Schaltkreis, oder softwareseitig, z. B. als logische Funktionseinheit, Softwaremodul oder Programmabschnitt, ausgestaltet sein. Vorzugsweise umfasst der Begriff auch hybride Ausgestaltungen, bei denen Hardware und Software in funktionaler Interaktion stehen, etwa in Form eines eingebetteten Systems mit aufgespielter Steuerlogik. Eine Einheit ist dabei nicht zwingend eine eigenständige Komponente, sondern kann vorzugsweise auch Teil eines größeren technischen Aufbaus sein, z. B. als Subsystem in einem Steuerungssystem oder als Modul in einer verteilten Architektur.

Die für das Verfahren gemachten Ausführungen gelten für die Vorrichtung entsprechend. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

In einem weiteren Aspekt wird vorgeschlagen, dass die verhandlungsrelevanten Eingabedaten vor der Verarbeitung vorzugsweise einer datenartenspezifischen Vorverarbeitung unterzogen werden, wobei unstrukturierte Daten vorzugsweise durch Tokenisierung, Named Entity Recognition (NER) und semantisches Chunking aufbereitet werden, während strukturierte Daten vorzugsweise durch Normalisierung und semantische Typenzuweisung angereichert werden.

In einem weiteren Aspekt wird vorgeschlagen, dass das maschinelle Lernmodell vorzugsweise über eine mehrstufige Architektur verfügt, die aus einem Encoder-Modul zur Kontextrepräsentation, einem Matching-Modul zum Vergleich mit der Verhandlungshistorie und einem Entscheidungsmodul zur Bewertung der semantischen Konsistenz aufgebaut ist, wobei die Module vorzugsweise hierarchisch oder sequentiell miteinander gekoppelt sind.

In einem weiteren Aspekt wird vorgeschlagen, dass innerhalb des Modells vorzugsweise ein Zwischenformat verwendet wird, das eine standardisierte, modalitätsübergreifende Repräsentation der Eingabedaten ermöglicht, wobei Text-, Audio- und Metadaten vorzugsweise in ein gemeinsames semantisches Vektorformat überführt werden, um einen konsistenten Vergleich zu gewährleisten.

In einem weiteren Aspekt wird vorgeschlagen, dass die Analyse der Lifeeingabe von verhandlungsbezogenen Informationselementen vorzugsweise über ein Attentionbasiertes Subsystem erfolgt, das kontextuell relevante Sequenzen der Eingabe priorisiert und deren semantische Relevanz in Bezug auf vergangene Aussagen oder bekannte Fakten hervorhebt.

In einem weiteren Aspekt wird vorgeschlagen, dass zur Erhöhung der Modelltransparenz vorzugsweise ein erklärbares Submodul integriert ist, das zu jeder detektierten Inkonsistenz eine Relevanzgewichtung und eine visuell interpretierbare Aufschlüsselung der Entscheidungslogik liefert.

In einem weiteren Aspekt wird vorgeschlagen, dass das Verfahren und/oder System vorzugsweise über eine datenschutzrechtlich gesicherte Modellschnittstelle verfügt, die den Zugriff auf Eingabedaten durch externe Komponenten auf ein Minimum beschränkt, wobei die Schnittstelle vorzugsweise auf einem containerisierten Zugriffskonzept basiert und sämtliche Anfragen mit temporären Zugriffstokens, rollenbasierter Autorisierung und Audit-Logging gesichert werden.

In einem weiteren Aspekt wird vorgeschlagen, dass das Modell vorzugsweise mit einem internen Datenflusskontrollmechanismus ausgestattet ist, der die Verarbeitung personenbezogener Daten so steuert, dass bestimmte Datenkategorien automatisch verschleiert oder pseudonymisiert weitergereicht werden, ohne die semantische Auswertbarkeit wesentlich zu beeinträchtigen.

In einem weiteren Aspekt wird vorgeschlagen, dass bei der Verarbeitung auditiver Spracheingaben vorzugsweise eine Kombination aus automatischer Sprechertrennung (Speaker Diarization) und domänenspezifischer Sprachmodellierung eingesetzt wird, um parallele oder überlappende Beiträge korrekt zu erfassen und einzelnen Verhandlungsteilnehmern zuzuordnen.

In einem weiteren Aspekt wird vorgeschlagen, dass die Einbindung der Verhandlungshistorie vorzugsweise über einen persistenten Kontextrahmen erfolgt, der bei jeder Analyse zyklisch aktualisiert wird, sodass das Modell einen fortlaufenden, konsistenten Zustand über den gesamten Verhandlungsverlauf aufrechterhält.

Gemäß einem dritten Aspekt wird ein Computerprogrammprodukt vorgeschlagen, das Programmcode aufweist, der auf einem computerlesbaren Medium gespeichert ist und bei Ausführung auf einem Computer das Verfahren gemäß einem der zuvor beschriebenen Aspekte zur Ausführung bringt.

Das Computerprogrammprodukt umfasst vorzugsweise eine Sammlung von Anweisungen, die in einer oder mehreren Programmiersprachen geschrieben sind und die vorzugsweise darauf ausgelegt sind, die im Verfahren beschriebenen Aufgaben und/oder Funktionen zu erfüllen, wenn sie von einem Computer ausgeführt werden. Die Anweisungen im Programm sind vorzugsweise so gestaltet, dass sie den Computer veranlassen, die verschiedenen Schritte und Abläufe des Verfahrens gemäß den angegebenen Aspekten zu durchlaufen und durchzuführen.

In einem weiteren Aspekt wird ein computerlesbarer Datenträger vorgeschlagen, auf dem ein solches Computerprogrammprodukt gespeichert ist.

Dieser computerlesbare Datenträger kann verschiedene physische Medien umfassen, wie CDs, DVDs, USB-Sticks, Festplatten oder Halbleiterspeicher, bspw. SSDs, die von Computern oder ähnlichen elektronischen Geräten gelesen werden können. Das auf dem Datenträger gespeicherte Computerprogrammprodukt umfasst vorzugsweise eine Sammlung von Anweisungen oder Code, die von einem Computer ausgeführt werden können, um spezifische Funktionen oder Aufgaben zu erfüllen. Das Programm kann in verschiedenen Programmiersprachen geschrieben sein und unterschiedliche Komponenten wie ausführbare Dateien, Bibliotheken, Konfigurationsdateien und Dokumentationen enthalten. Der Datenträger ermöglicht es vorzugsweise dem Computer, das darauf gespeicherte Programm zu lesen und auszuführen, um die vorgesehenen Funktionen zu realisieren.

In einer konkreten Ausführungsform wird das Verfahren und/oder System im Rahmen einer mündlichen Verhandlung vor einem Familiengericht eingesetzt. Eine Verfahrensbeteiligte befindet sich in einem Sorgerechtsstreit, bei dem in der Verhandlung verschiedene widersprüchliche Aussagen über das Verhalten eines Elternteils gegenüber dem Kind gemacht werden. Das Sprachmodell wird im Vorfeld mit der Verfahrenshistorie gespeist, darunter Gutachten, Anhörungsprotokolle und bisherige gerichtliche Stellungnahmen. Während der mündlichen Verhandlung erkennt das Modell eine neue Aussage des Gegners, die von bisherigen Angaben abweicht. Die Aussage wird automatisch transkribiert, mit der Fallhistorie verglichen und als potenziell inkonsistent markiert. Das System generiert in Echtzeit einen Hinweis an die Verfahrensbeteiligte mit einer konkreten Handlungsempfehlung, etwa die Bezugnahme auf ein früheres Gutachten. Dies unterstützt die betroffene Partei darin, sachlich fundiert und zeitnah zu reagieren.

In einem weiteren Ausführungsbeispiel wird das Verfahren und/oder System im Rahmen einer komplexen Vertragsverhandlung zwischen zwei Unternehmen eingesetzt. Ein Verhandlungsführer nutzt das System über ein Tablet-Gerät, wobei das Modell im Vorfeld mit allen Entwurfsfassungen des Vertrags, E-Mail-Korrespondenzen und juristischen Kommentierungen versorgt wurde. Im Verlauf der Verhandlung bringt die Gegenseite eine abweichende Deutung einer Vertragsklausel vor, die in einer früheren Fassung anders festgelegt war. Das System erkennt diese Abweichung in Echtzeit, vergleicht die gesprochene Aussage mit dem dokumentierten Verlauf der Klauselentwicklung und meldet eine semantische Inkonsistenz. Es erzeugt gleichzeitig eine Empfehlung zur Argumentation, mit Verweis auf die maßgebliche Fassung und die ursprüngliche Verhandlungsabsicht. Dies verbessert die Verhandlungsposition und sichert die Konsistenz der Ergebnisse.

Darüber hinaus kann das Verfahren auch von Mitgliedern des Rechtsprechungskörpers, insbesondere von Richtern, als Assistenzsystem eingesetzt werden. Während der Verhandlung analysiert das Modell kontinuierlich die Aussagen beider Parteien und vergleicht diese mit dem Akteninhalt sowie mit einschlägiger Rechtsprechung, auf die es über externe juristische Datenbanken zugreift. Widersprüche zwischen dem mündlichen Vortrag und schriftlichen Beweismitteln oder früheren Aussagen können in strukturierter Form angezeigt werden. Zudem kann das System darauf hinweisen, ob eine bestimmte Argumentation mit der bisherigen Spruchpraxis vereinbar erscheint. Dadurch wird die Entscheidungsfindung unterstützt, insbesondere in umfangreichen Verfahren mit komplexer Aktenlage, ohne die richterliche Unabhängigkeit zu beeinträchtigen. Das System fungiert dabei als kognitives Unterstützungstool, das dazu beiträgt, Argumentationslinien objektiv nachzuvollziehen und gleichartige Fälle einheitlich zu bewerten.

In einem weiteren Aspekt wird vorgeschlagen, dass das Verfahren und/oder System vorzugsweise in Form einer modularen Softwarearchitektur realisiert ist, die auf einem lokalen Endgerät, einer abgesicherten Server-Infrastruktur oder in einer hybriden Cloud-Edge-Konfiguration betrieben werden kann. Je nach Anwendungsfall kann das System vorzugsweise als Desktop-Anwendung, mobile App, webbasiertes Interface und/oder eingebettete Komponente in bestehende Konferenz- und Verhandlungsplattformen integriert werden.

Die Komponetenen umfassen vorzugsweise ein ASR-Modul (Automatic Speech Recognition), ein semantisches Analysemodul, eine Wissensmanagementschnittstelle sowie ein Erklärbarkeits- und Visualisierungsmodul. Die Kommunikation zwischen den Modulen erfolgt vorzugsweise über standardisierte APIs oder interne Datenbusse, wodurch eine Erweiterbarkeit durch Drittkomponenten ermöglicht wird. Das Modell selbst kann vorzugsweise auf einem vortrainierten, vorzugsweise multimodalen LLM basieren, das durch Fine-Tuning an domänenspezifischen Verhandlungsdaten angepasst wurde. Ergänzend kann eine Low-Latency-Inferenzarchitektur eingesetzt werden, um Reaktionszeiten im Bereich von wenigen hundert Millisekunden zu erreichen, insbesondere bei Echtzeitanwendungen.

Darüber hinaus wird in einem weiteren Aspekt vorgeschlagen, dass das Verfahren und/oder System vorzugsweise mit Mitteln der erweiterten Realität (AR) gekoppelt werden kann, etwa über Smart Glasses, Head-Mounted Displays (HMD) und/oder transparente Touch-Oberflächen, um Verhandlungsteilnehmern während der laufenden Kommunikation visuelle Hinweise, kontextabhängige Hervorhebungen oder alternative Formulierungsvorschläge in das Sichtfeld einzublenden. Dabei erfolgt die Einblendung vorzugsweise adaptiv und non-invasiv, sodass der natürliche Kommunikationsfluss nicht gestört wird. Das System kann dabei in Echtzeit erkannte semantisch relevante Abweichungen und/oder Kontextveränderungen und/oder vorgeschlagene Vertragsanpassungen als Overlays neben dem gesprochenen Beitrag der Gegenseite anzeigen, inklusive Begründung, Relevanzbewertung und historischen Bezügen. Vorzugsweise können auch interaktive Eingriffe durch Blickverfolgung, Gestensteuerung oder sprachliche Rückkopplung erfolgen, sodass ein nahtloses Zusammenspiel zwischen Analyse, Rückmeldung und Nutzerreaktion entsteht. Die Verbindung von KI-gestützter Verhandlungsunterstützung und immersiver AR-Technologie erlaubt es, situativ relevante Informationen kontextualisiert, visuell aufbereitet und benutzerzentriert direkt im Kommunikationsgeschehen verfügbar zu machen. Dies erhöht nicht nur die kognitive Verfügbarkeit entscheidungsrelevanter Inhalte, sondern ermöglicht auch eine tiefere situative Orientierung in komplexen Verhandlungssituationen.

In einem weiteren Aspekt wird vorgeschlagen, dass das maschinelle Lernmodell vorzugsweise eine stimmakustische Analyse umfasst, um emotionale und/oder affektive Merkmale gesprochener Sprache zu identifizieren. Hierzu kann insbesondere eine Subkomponente eingesetzt werden, die auf Grundlage akustischer Merkmale wie Tonhöhe, Lautstärkeverlauf, Sprachrhythmus, Sprechgeschwindigkeit und/oder spektraler Signaturen eine Klassifikation der emotionalen Verfassung vornimmt.

Vorzugsweise wird die Analyse durch ein vortrainiertes neuronales Netz durchgeführt, insbesondere ein Convolutional Neural Network (CNN) oder ein Sound Transformer, das für die Emotionsdetektion optimiert wurde. Die gewonnenen Merkmale können entweder direkt als Interpretation ausgegeben oder in einem multimodalen Entscheidungsprozess weiterverwendet werden, beispielsweise zur Einschätzung der Gesprächsdynamik oder zur Ableitung einer emotionalen Relevanzgewichtung bestimmter Aussagen. Dies erlaubt eine tiefergehende Kontextbewertung und unterstützt die Detektion von eskalierenden, affektiv geladenen oder strategisch manipulativen Kommunikationsmustern.

In einem weiteren Aspekt wird vorgeschlagen, dass das Verfahren und/oder System vorzugsweise ein Nebenmodell (side model) umfasst, das parallel zur Hauptauswertung Sprache und transkribierten Text verarbeitet, um eine Indikation für kritische Kommunikationsverläufe zu liefern. Das Nebenmodell ist vorzugsweise als Klassifikator ausgestaltet, der einen Graduierungswert generiert, der anzeigt, ob bestimmte Aussagen und/oder deren emotionale Einbettung ein erhöhtes Risiko für Täuschung, Eskalation oder strategische Umdeutung bergen. Der Graduierungswert kann beispielsweise auf einer Skala (z. B. von 0 bis 1 oder in diskreten Stufen) visualisiert und mit entsprechenden Warnhinweisen versehen werden. Das Nebenmodell kann wahlweise aktiv zugeschaltet oder passiv im Hintergrund betrieben werden, wobei eine Rückmeldung nur bei Überschreiten definierter Schwellenwerte erfolgt. Dies ermöglicht es, potenziell risikobehaftete Aussagen automatisiert zu erkennen und gezielt zu adressieren, insbesondere in Verhandlungssituationen mit asymmetrischer Informationsverteilung.

In einem weiteren Aspekt wird vorgeschlagen, dass die vom Verfahren und/oder System generierten Hinweise und/oder Empfehlungen vorzugsweise zusätzlich als strukturierte, physisch ausgebbare Formate bereitgestellt werden, insbesondere als Ausdruck in Form von Briefingkarten, Moderationskarten und/oder kompakten Zusammenfassung. Diese physischen Formate können vorzugsweise für die analoge Nutzung während der Verhandlung auf Papier zur Verfügung gestellt werden, etwa zur schnellen Reaktion oder zur diskreten Vorbereitung von Erwiderungen. Der technische Vorteil liegt darin, dass die Verarbeitungsinformationen nicht ausschließlich in digitaler Form verbleiben, sondern auch in Umgebungen ohne Bildschirminteraktion wirksam genutzt werden können, wodurch eine physikalische Wechselwirkung mit dem realen Verhandlungsgeschehen unterstützt wird.

In einem weiteren Aspekt wird vorgeschlagen, dass das Verfahren und/oder System eine Betriebsart umfasst, in der Lifeeingaben von verhandlungsbezogenen Informationselementen, insbesondere Spracheingaben, nur teilweise erfasst und ohne vollständige Speicherung oder Transkription verarbeitet werden. Hierzu kann insbesondere eine Subkomponente vorgesehen sein, die einzelne Schlüsselwörter und/oder semantische Marker, insbesondere in Echtzeit, detektiert, ohne dass eine dauerhafte Sprachaufzeichnung erfolgt. Die detektierten Wörter werden vorzugsweise lokal zwischengespeichert und visuell dem Nutzer zur Auswahl oder Bestätigung präsentiert. Erst nach manueller Freigabe erfolgt vorzugsweise eine Weiterleitung an eine Verarbeitungseinheit, die die Stichwörter mit der Kontextliteratur und/oder der Verhandlungshistorie abgleicht. Die Zuordnung erfolgt vorzugsweise mittels semantischer Ähnlichkeitsmetriken, insbesondere über cosinusbasierte Vektorvergleiche oder ähnliche Verfahren. Der technische Vorteil liegt darin, dass ein datenschutzsensibler Modus zur Verfügung steht, der Sprachverarbeitung ohne vollständige Spracherfassung ermöglicht.

In einem weiteren Aspekt wird vorgeschlagen, dass das System und/oder Verfahren wahlweise auch ohne direkte Lifeeingabe von verhandlungsbezogenen Informationselementen, insbesondere Spracheingabe, betrieben werden kann, indem es auf eine semantisch strukturierte Repräsentation der Verhandlungshistorie zugreift und diese als interaktive Oberfläche bereitstellt. Die Strukturierung erfolgt vorzugsweise themenbasiert, wobei die Themenfelder über Tasteneingabe, Touch-Gesten oder Freitexteingabe, einschließlich handschriftlicher Eingaben, aktiviert werden können. In Reaktion auf die Eingabe generiert das System vorzugsweise relevante Kontexthinweise, Verweise auf frühere Aussagen und/oder argumentativ verwertbare Inhalte. Diese Betriebsart erlaubt es, Sprachaufnahme vollständig zu vermeiden, was insbesondere in offiziellen, protokollierten und/oder hochsensiblen Situationen von Vorteil ist.

Hierzu kann beispielhaft ein computerimplementiertes Verfahren und/oder System zur Unterstützung einer mündlichen Verhandlung in einem interaktiven Kommunikationskontext durch ein maschinelles Lernmodell, insbesondere ein Sprachmodell vorgeschlagen sein, umfassend die Schritte: Bereitstellen von verhandlungsrelevanten Informationen, die eine Verhandlungshistorie eines bestimmten Falls abbilden; alternativ oder ergänzend: Bereitstellen einer semantisch strukturierten Repräsentation der Verhandlungshistorie, insbesondere als interaktive Benutzeroberfläche, wobei die Strukturierung themenbasiert erfolgt und die Themenfelder durch Nutzereingaben, insbesondere Tasteneingaben, Touch-Gesten und/oder Freitexteingaben, vorzugsweise einschließlich handschriftlicher Eingaben, auswählbar sind; und/oder Erfassen und/oder Umwandeln einer Lifeeingabe von verhandlungsbezogenen Informationselementen, insbesondere gesprochener Sprache, in Textdaten; semantisches Analysieren der Textdaten und/oder der über die interaktive Benutzeroberfläche aktivierten Themenfelder unter Rückgriff auf die bereitgestellte Verhandlungshistorie und/oder eine Wissensdatenbank; Identifizieren von semantisch relevanten Abweichungen und/oder Kontextveränderungen in der Lifeeingabe von verhandlungsbezogenen Informationselementen, den Textdaten und/oder in Bezug auf die thematisch aktivierten Kontexteinträge; und Ausgeben eines Hinweises auf die erkannten semantisch relevanten Abweichungen und/oder Kontextveränderungen an einen Nutzer. Die gemachten Ausführungen und Ausführungsbeispiele gelten auch für dieses Verfahren in gleicher oder ähnlicher Form.

In einem weiteren Aspekt wird vorgeschlagen, dass das Verfahren und/oder System vorzugsweise auch zur Analyse von Einladungsschreiben und/oder digitalen Kalendereinträgen befähigt ist. Vorzugsweise werden bei empfangenen digitalen Einladungen Inhalte wie Terminangaben, Teilnehmerlisten, angehängte Dokumente oder eingebettete Links automatisch extrahiert und in die Fallhistorie integriert. Dies ermöglicht eine kontextabhängige Vorbereitung auf eine bevorstehende Verhandlung und/oder Anhörung, insbesondere durch Vorabermittlung relevanter Themen, Positionen und/oder bereits getätigter Aussagen. Bei offiziellen Einladungen, etwa gerichtlicher Anhörungen, kann zudem eine formale Prüfung auf Zuständigkeit, Fristwahrung und/oder Terminüberschneidungen erfolgen. Der technische Vorteil liegt in der automatisierten Zusammenführung von organisatorischer Vorinformation und inhaltlicher Verhandlungsstruktur.

Weitere mögliche Ausgestaltungen, Weiterbildungen, Aspekte und/oder Implementierungen der Erfindung weisen auch nicht explizit genannte Kombinationen von den zuvor genannten oder nachstehend noch zu erläuternden Merkmalen auf. Eine, ein wird vorliegend als "mindestens eine" bzw. "mindestens ein" verstanden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: ein schematisches Flussdiagramm eines Ausführungsbeispiels des Verfahrens;
- Fig. 2: ein schematisches Blockdiagramm eines Ausführungsbeispiels des Systems;
- Fig. 3: ein schematisches Blockdiagramm eines Ausführungsbeispiels des Systems;
- Fig. 4: ein schematisches Blockdiagramm eines Ausführungsbeispiels des Systems;
- Fig. 5: ein schematisches Blockdiagramm eines computerlesbaren Datenträgers und einer semantischen Bewertung;
- Fig. 6: ein schematisches Blockdiagramm eines Ausführungsbeispiels des Systems;

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

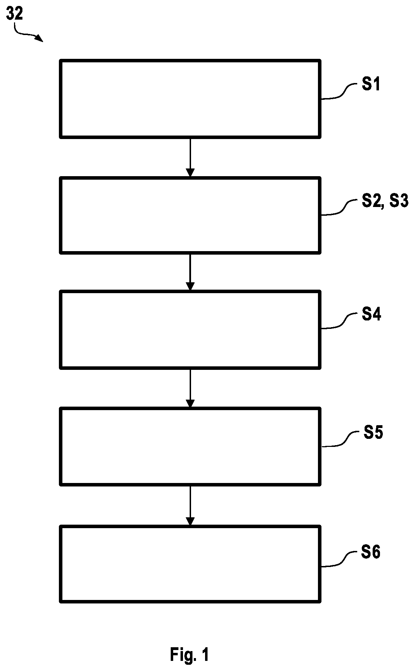

Fig. 1 zeigt ein schematisches Flussdiagramm eines computerimplementierten Verfahrens zur Unterstützung einer mündlichen Verhandlung in einem interaktiven Kommunikationskontext durch ein maschinelles Lernmodell 1, insbesondere ein Sprachmodell 2.

Das Verfahren kann in einer beliebigen Ausführungsform zumindest teilweise durch ein System 32 ausgeführt werden, das hierzu mehrere nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann, oder von dieser unterschiedlich sein kann.

Das computerimplementierte Verfahren umfasst mindestens die folgenden Schritte:
In einem Schritt S1 erfolgt ein von verhandlungsrelevanten Informationen 3, die eine Verhandlungshistorie eines bestimmten Falls abbilden.

In einem Schritt S2 und S3 erfolgt ein Erfassen und/oder Umwandeln einer Lifeeingabe 4 von verhandlungsbezogenen Informationselementen, insbesondere gesprochener Sprache, in Textdaten 5.

In einem Schritt S4 erfolgt ein semantisches Analysieren der Textdaten 5 durch Vergleich mit der bereitgestellten Verhandlungshistorie 3 und/oder einer Wissensdatenbank 6.

In einem Schritt S5 erfolgt ein Identifizieren von semantisch relevanten Abweichungen und/oder Kontextveränderungen 7 in der Lifeeingabe 4 von verhandlungsbezogenen Informationselementen und/oder den Textdaten 5.

In einem Schritt S6 erfolgt ein Ausgeben eines Hinweises 8 auf die erkannten semantisch relevanten Abweichungen und/oder Kontextveränderungen 7 an einen Nutzer 9.

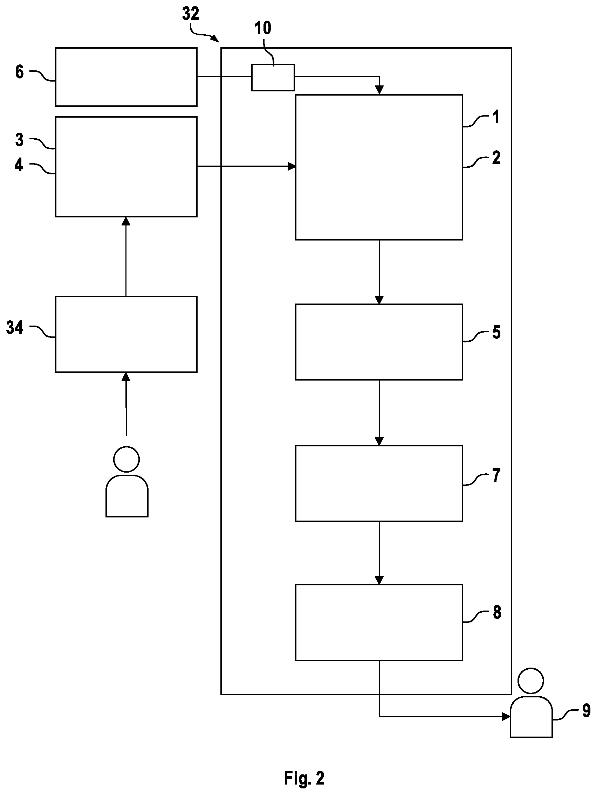

Figur 2 zeigt eine schematische Darstellung eines computerimplementierten Systems 32 zur Unterstützung einer mündlichen Verhandlung in einem interaktiven Kommunikationskontext, insbesondere in Echtzeit. Das System 32 umfasst ein maschinelles Lernmodell, insbesondere ein Sprachmodell 2, das als zentrale Datenverarbeitungseinheit ausgestaltet ist. Dieses Sprachmodell 2 verarbeitet sowohl verhandlungsrelevante Informationen 3 als auch eine gesprochene Lifeeingabe 4 von verhandlungsbezogenen Informationselementen, die durch eine Schnittstelle 34 in das System eingespeist wird. Die Schnittstelle 34 ist dafür ausgelegt, Spracheingaben während der Verhandlung zu erfassen, vorzugsweise durch ein Mikrofonmodul oder durch eine Spracherkennungseinheit.

Die empfangene gesprochene Sprache 4 wird in Textdaten 5 umgewandelt. Diese Textdaten 5 werden durch das Sprachmodell 2 semantisch analysiert. Die Analyse erfolgt vorzugsweise unter Rückgriff auf die bereitgestellten verhandlungsrelevanten Informationen 3, welche z. B. eine strukturierte oder unstrukturierte Verhandlungshistorie umfassen können.

Im Verlauf der semantischen Analyse identifiziert das Sprachmodell 2 semantisch relevante Abweichungen und/oder Kontextveränderungen 7, also insbesondere inhaltliche Widersprüche, Täuschungen, strategisches Verhalten und/oder argumentative Unschärfen in der Lifeeingabe 4 von verhandlungsbezogenen Informationselementen. Sobald eine semantische Inkonsistenz 7 erkannt wird, wird ein Hinweis 8 generiert, der wiederum dem Nutzer 9 bereitgestellt wird, beispielsweise durch eine geeignete Ausgabeeinheit, etwa als Text, Signal und/oder Audioausgabe.

Das Sprachmodell 2 kann außerdem auf eine externe Wissensdatenbank 6 über Retrieval-Augmented Generation 10 zugreifen, um die semantische Analyse und Generierung des Hinweises 8 zu fundieren. Diese Funktion ist insbesondere für juristische Kontexte von Bedeutung, um fundierte Argumentationslinien aufzubauen. Die gesamte Verarbeitung erfolgt im System 32 unter der Annahme eines DSGVO-konformen Betriebs. Der Schutz personenbezogener Daten wird dabei z. B. durch lokale Verarbeitung, verschlüsselte Übertragung, rollenbasierte Zugriffskontrollen und/oder Protokollierung realisiert.

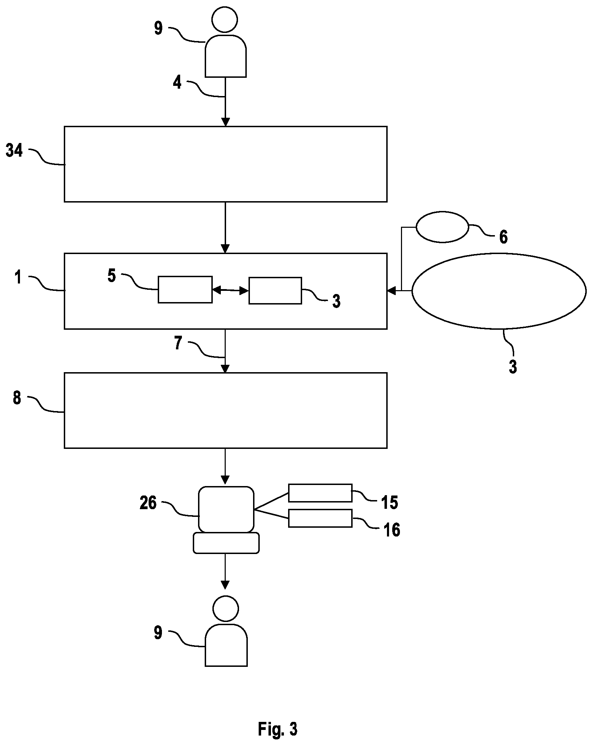

Die Figuren 3 bis 5 zeigen unterschiedliche Aspekte eines computerimplementierten Verfahrens und zugehöriger Systemkomponenten zur Unterstützung einer mündlichen

Verhandlung in einem interaktiven Kommunikationskontext durch ein maschinelles Lernmodell. Figur 3 zeigt ein Verfahrensschema zur Erkennung semantischer Inkonsistenzen in einer Lifeeingabe 4 von verhandlungsbezogenen Informationselementen durch das maschinelle Lernmodell 1. Ferner werden verhandlungsrelevante Informationen 3 über die Schnittstelle 34 bereitgestellt, die eine Verhandlungshistorie zu einem konkreten Fall abbilden. Ein Nutzer 9 übermittelt gesprochene Sprache als Lifeeingabe 4 von verhandlungsbezogenen Informationselementen, die durch eine Schnittstelle 34 erfasst und durch das maschinelle Lernmodell 1 in Textdaten 5 umgewandelt wird.

Das Sprachmodell 2 verarbeitet die Textdaten 5, analysiert sie semantisch im Vergleich zu den verhandlungsrelevanten Informationen 3 sowie optional zu externen Wissensquellen 6 (z. B. juristische Datenbanken). Dabei werden semantisch relevante Abweichungen und/oder Kontextveränderungen 7 erkannt, etwa inhaltliche Widersprüche, logische Fehler oder Täuschungsversuche.

Ein Hinweis 8 auf die erkannte Inkonsistenz 7 wird generiert und über die Ausgabeeinheit 26 an den Nutzer 9 ausgegeben. Diese Hinweise 8 können insbesondere auch Handlungsempfehlungen 15 umfassen, etwa eine Gegenargumentation 16 zur Detektion strategisch-taktischen Verhaltens.

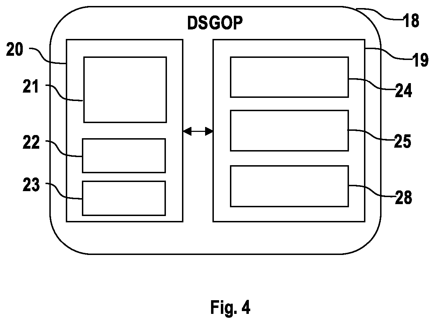

Figur 4 zeigt die technische Umsetzung von datenschutzrechtlichen Vorgaben 18 gemäß DSGVO (oder selbstredend darauffolgenden Gesetzgebungen) bei Betrieb des Verfahrens. Die Verarbeitung der Daten erfolgt entweder lokal oder in einer DSGVO-konformen Cloud-Umgebung 19 mit Ende-zu-Ende-Verschlüsselung.

Ein Zugriff auf personenbezogene Daten ist durch rollenbasierte Zugriffskontrollen 20 beschränkt, die nur berechtigten Benutzergruppen 21 Zugriff gewähren. Es erfolgt vorzugsweise eine Protokollierung 22 der Zugriffe. Sämtliche Zugriffe und Verarbeitungsvorgänge werden in einem Audit-Log 23 dokumentiert, das durch autorisierte Prüfinstanzen 24 kontrolliert werden kann.

Zur Minimierung der Datenverwendung werden personenbezogene Inhalte vor der Verarbeitung pseudonymisiert und/oder anonymisiert 25. Zusätzlich werden technische Schutzmaßnahmen 28 implementiert, um die Vertraulichkeit sensibler Informationen sicherzustellen.

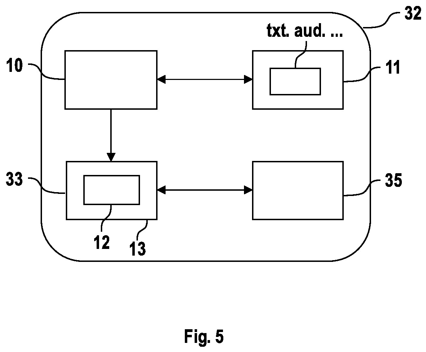

Figur 5 zeigt das computerimplementierte System 32, das das vorliegende Verfahren ausführt. Das System 32 umfasst eine Datenverarbeitungseinheit 33, in der das Sprachmodell 2 integriert sein kann. Eine weitere Komponente ist das Retrieval-Augmented Generation-Modul 10, das den Zugriff auf externe Wissensquellen 6 (z. B. juristische Literatur oder Rechtsprechung) ermöglicht. Das System 32 ist dazu ausgelegt, unterschiedliche Eingabedatenformate 11 zu verarbeiten, darunter unstrukturierte und strukturierte Textdaten, Audiodaten, Videodaten, Bilddaten sowie numerische Daten. Die Ausgabe der Analyseergebnisse erfolgt über eine Ausgabeeinheit 35. Das Sprachmodell 2 umfasst optional spezialisierte Subkomponenten 12, die auf die Verarbeitung bestimmter Datenarten trainiert sind (z. B. Sprachverarbeitung, Texterkennung, visuelle Analyse). Das Modell kann als Expertenmodell 13 ausgeführt sein, mit Abschnitten für verschiedene Fachgebiete (z. B. Vertragsrecht, Zivilprozessrecht).

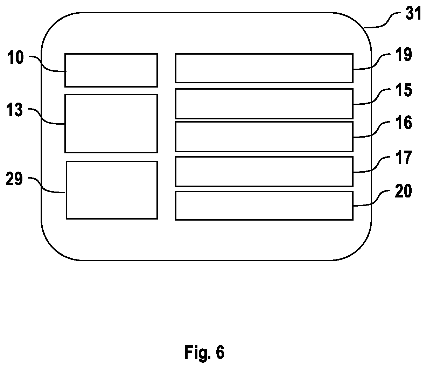

Figur 6 zeigt den rein schematischen und beispielhaften Aufbau eines computerlesbaren Datenträgers 31, auf dem ein Computerprogramm gespeichert ist, das die Verfahrensschritte des vorliegenden Verfahrens ausführt. Der Datenträger 31 umfasst u. a. Module zur Retrieval-Augmented Generation 10, zur Analyse von Eingaben im interaktiven Kommunikationskontext 29 sowie zur Erkennung semantischer Inkonsistenzen 7. Im Rahmen der Analyse erzeugt das System 32 Hinweise 8 und bewertet die Situation semantisch, insbesondere durch die Generierung einer Handlungsempfehlung 15. Diese Empfehlung basiert auf einer identifizierten Inkonsistenz und umfasst eine darauf abgestimmte Gegenargumentation 16. Darüber hinaus wird die Empfehlung mit einer nachvollziehbaren Begründung 17 versehen, die sich auf die Verhandlungshistorie 3 und/oder externe Wissensquellen 6 stützt. Im mehrsprachigen Kontext können Übersetzungsfehler und Syntaxfehler durch das System 32 erkannt und durch entsprechende logische Korrekturen kompensiert werden.

### Bezugszeichenliste

- 1: Maschinelles Lernmodell
- 2: Sprachmodell
- 3: Verhandlungsrelevante Informationen
- 4: Spracheingabe / gesprochene Sprache
- 5: Textdaten
- 6: Wissensdatenbank / externe Wissensquelle
- 7: Semantisch relevante Abweichungen und/oder Kontextveränderungen
- 8: Hinweis auf Inkonsistenz
- 9: Nutzer
- 10: Retrieval-Augmented Generation (RAG)
- 11: Eingabedatenformate (z. B. Text, Audio, Video, Bild, numerisch)
- 13: Expertenmodell / Modellabschnitte
- 15: Handlungsempfehlung
- 16: Gegenargumentation
- 17: Begründung
- 18: Datenschutzrechtliche Vorgaben
- 19: DSGVO-konforme Cloud-Umgebung
- 20: Rollenbasierte Zugriffskontrollen
- 21: Berechtigte Benutzergruppen
- 22: Protokollierung der Zugriffe
- 23: Audit-Log
- 24: Autorisierte Prüfinstanzen
- 25: Pseudonymisierung / Anonymisierung
- 26: Ausgabeeinheit
- 28: Technische Schutzmaßnahmen
- 29: Interaktiver Kommunikationskontext
- 31: Computerlesbarer Datenträger
- 32: Computerimplementiertes System
- 33: Datenverarbeitungseinheit
- 34: Schnittstelle zur Spracheingabe / Dateneingabe
- 35: Ausgabeeinheit
- S1: Verfahrensschritt
- S2: Verfahrensschritt
- S3: Verfahrensschritt
- S4: Verfahrensschritt
- S5: Verfahrensschritt
- S6: Verfahrensschritt

## Patentansprüche

1. Computerimplementiertes Verfahren zur Unterstützung einer mündlichen Verhandlung in einem interaktiven Kommunikationskontext (29) durch ein maschinelles Lernmodell (1), insbesondere ein Sprachmodell (2), umfassend die Schritte:
Bereitstellen (S1) von verhandlungsrelevanten Informationen (3), die eine Verhandlungshistorie eines bestimmten Falls abbilden;
Erfassen und/oder Umwandeln (S2, S3) einer Lifeeingabe (4) von verhandlungsbezogenen Informationselementen, insbesondere gesprochener Sprache, in Textdaten (5);
semantisches Analysieren (S4) der Textdaten (5) durch Vergleich mit der bereitgestellten Verhandlungshistorie (3) und/oder einer Wissensdatenbank (6);
Identifizieren (S5) von semantisch relevanten Abweichungen und/oder Kontextveränderungen (7) in der Lifeeingabe (4) von verhandlungsbezogenen Informationselementen und/oder den Textdaten (5); und
Ausgeben (S6) eines Hinweises (8) auf die erkannten semantisch relevanten Abweichungen und/oder Kontextveränderungen (7) an einen Nutzer (9).

2. Verfahren nach Anspruch 1, wobei das maschinelle Lernmodell (2) auf die externe Wissensdatenbank (6), insbesondere eine juristische und/oder wissenschaftliche Datenbank, eine Rechtsprechungs-Datenbank und/oder Kommentarliteratur-Datenbank, vorzugsweise über Retrieval-Augmented Generation (10) zugreift.

3. Verfahren nach Anspruch 1 oder 2, wobei das maschinelle Lernmodell (2) unterschiedliche Eingabedatenformate (11) zur Beschreibung der Verhandlungshistorie (3) verarbeitet, insbesondere unstrukturierte und/oder strukturierte Textdaten und/oder Audiodaten und/oder Videodaten und/oder Bilddaten und/oder numerische Daten.

4. Verfahren nach einem der vorstehenden Ansprüche, wobei die Verarbeitung der unterschiedlichen Eingabedaten (11) durch spezialisierte Subkomponenten des maschinellen Lernmodells (1) erfolgt, die jeweils auf bestimmte Datenarten trainiert und/oder auf die Verarbeitung bestimmter Datenarten spezialisiert sind.

5. Verfahren nach einem der vorstehenden Ansprüche, wobei das maschinelle Lernmodell (1) als Expertenmodell (13) mit verschiedenen modellinternen Abschnitten aufgebaut ist, die jeweils auf bestimmte Fachgebiete spezialisiert sind.

6. Verfahren nach einem der vorstehenden Ansprüche, wobei das maschinelle Lernmodell (1) eine mehrsprachige Spracheingabe verarbeitet, wobei insbesondere Übersetzungsfehler und/oder Syntaxfehler erkannt und/oder kompensiert werden.

7. Verfahren nach einem der vorstehenden Ansprüche, wobei das maschinelle Lernmodell (1) den Hinweis (8) auf die erkannten semantisch relevanten Abweichungen und/oder Kontextveränderungen (7) in Form einer konkreten Handlungsempfehlung (15) für eine Erwiderung auf die semantisch relevanten Abweichungen und/oder Kontextveränderungen generiert, insbesondere durch Bewertung eines identifizierten Fehlverhaltens und Generierung einer semantisch konsistenten und/oder darauf abgestimmten Gegenargumentation (16).

8. Verfahren nach Anspruch 7, wobei die Handlungsempfehlung (15) mit einer Begründung (17) versehen ist, die sich auf die Verhandlungshistorie (3) und/oder externe Wissensdatenbank (6) stützt.

9. Verfahren nach einem der vorstehenden Ansprüche, wobei das maschinelle Lernmodell (1) unter Einhaltung datenschutzrechtlicher Bestimmungen (18), insbesondere der DSGVO, betrieben wird, und wobei die technische Umsetzung der Vertraulichkeit insbesondere folgende Maßnahmen umfasst:
Verarbeitung sämtlicher verhandlungsrelevanter Daten (3) ausschließlich auf lokal betriebenen Geräten oder in einer zertifizierten, datenschutzrechtskonformen Cloud-Umgebung (19) mit Ende-zu-Ende-Verschlüsselung;
Einsatz von rollenbasierten Zugriffskontrollen (20) zur Beschränkung des Datenzugriffs auf berechtigte Benutzergruppen (21);
automatisierte Protokollierung (22) aller Zugriffs- und Verarbeitungsaktivitäten in einem nicht manipulierbaren Audit-Log (23) zur Nachvollziehbarkeit und Kontrolle durch autorisierte Prüfinstanzen (24);
Pseudonymisierung und/oder Anonymisierung (25) personenbezogener Daten vor Modellverarbeitung zur Minimierung der personenbezogenen Datenverwendung;
Implementierung eines Löschkonzepts mit definierten Löschfristen und technisch kontrollierbaren Datenlebenszyklen;
Verwendung technischer Schutzmaßnahmen (28) bei der Verarbeitung sensibler Informationen.

10. Verfahren nach einem der vorstehenden Ansprüche, wobei das maschinelle Lernmodell (1) so ausgebildet ist, dass es in Echtzeit während einer mündlichen Verhandlung arbeitet und laufend neue gesprochene Beiträge analysiert und, insbesondere fortlaufend oder intervallweise, Hinweise (8) auf die erkannten semantisch relevanten Abweichungen und/oder Kontextveränderungen (7) ausgibt.

11. Verfahren nach einem der vorstehenden Ansprüche, wobei der interaktive Kommunikationskontext (29) ein vertragliches, geschäftliches, juristisches und/oder gerichtliches Umfeld umfasst.

12. Verfahren nach einem der vorstehenden Ansprüche, wobei die semantisch relevanten Abweichungen und/oder Kontextveränderungen (7) Unstimmigkeiten, faktische Fehler, Täuschungsversuche und/oder strategisch-taktisches Verhalten des Gegenübers umfassen.

13. Computerprogrammprodukt, umfassend Befehle, die bei der Ausführung des Programms durch einen Computer diesen veranlassen, die Schritte des Verfahrens nach einem der Ansprüche 1 bis 12 auszuführen.

14. Computerlesbarer Datenträger (31), auf dem das Computerprogrammprodukt nach Anspruch 13 gespeichert ist.

15. Computerimplementiertes System (32) zur Unterstützung mündlicher Verhandlungen in einem interaktiven Kommunikationskontext (29), umfassend:
eine Datenverarbeitungseinheit (33) mit einem maschinellen Lernmodell (2), das konfiguriert ist zur Durchführung eines Verfahrens gemäß einem der Ansprüche 1 bis 12;
mindestens eine Schnittstelle (34) zur Eingabe gesprochener Sprache (4) und zur Bereitstellung verhandlungsrelevanter Daten (3); und
eine Ausgabeeinheit (35) zur Darstellung der analysierten Informationen, insbesondere erkannter semantisch relevanter Abweichungen und/oder Kontextveränderungen (7) und Handlungsempfehlungen (15).

## Geänderte Patentansprüche

### Geänderte Patentansprüche gemäss Regel 137(2) EPÜ.

1. Computerimplementiertes Verfahren zur Unterstützung einer mündlichen Verhandlung in einem interaktiven Kommunikationskontext (29) durch ein maschinelles Lernmodell (1), insbesondere ein Sprachmodell (2), umfassend die Schritte:
Bereitstellen (S1) von verhandlungsrelevanten Informationen (3), die eine Verhandlungshistorie eines bestimmten Falls abbilden, wobei die Verhandlungshistorie über einen persistenten Kontextrahmen eingebunden wird, der bei jeder Analyse zyklisch aktualisiert wird, sodass das maschinelle Lernmodell einen fortlaufenden, konsistenten Zustand über den gesamten Verhandlungsverlauf aufrechterhält;
Erfassen und/oder Umwandeln (S2, S3) einer Lifeeingabe (4) von verhandlungsbezogenen Informationselementen, insbesondere gesprochener Sprache, in Textdaten (5);
semantisches Analysieren (S4) der Textdaten (5) durch Vergleich mit der bereitgestellten Verhandlungshistorie (3) und/oder einer Wissensdatenbank (6);
Identifizieren (S5) von semantisch relevanten Abweichungen und/oder Kontextveränderungen (7) in der Lifeeingabe (4) von verhandlungsbezogenen Informationselementen und/oder den Textdaten (5); und
Ausgeben (S6) eines Hinweises (8) auf die erkannten semantisch relevanten Abweichungen und/oder Kontextveränderungen (7) an einen Nutzer (9).

2. Verfahren nach Anspruch 1, wobei das maschinelle Lernmodell (2) auf die externe Wissensdatenbank (6), insbesondere eine juristische und/oder wissenschaftliche Datenbank, eine Rechtsprechungs-Datenbank und/oder Kommentarliteratur-Datenbank, vorzugsweise über Retrieval-Augmented Generation (10) zugreift.

3. Verfahren nach Anspruch 1 oder 2, wobei das maschinelle Lernmodell (2) unterschiedliche Eingabedatenformate (11) zur Beschreibung der Verhandlungshistorie (3) verarbeitet, insbesondere unstrukturierte und/oder strukturierte Textdaten und/oder Audiodaten und/oder Videodaten und/oder Bilddaten und/oder numerische Daten.

4. Verfahren nach einem der vorstehenden Ansprüche, wobei die Verarbeitung der unterschiedlichen Eingabedaten (11) durch spezialisierte Subkomponenten des maschinellen Lernmodells (1) erfolgt, die jeweils auf bestimmte Datenarten trainiert und/oder auf die Verarbeitung bestimmter Datenarten spezialisiert sind.

5. Verfahren nach einem der vorstehenden Ansprüche, wobei das maschinelle Lernmodell (1) als Expertenmodell (13) mit verschiedenen modellinternen Abschnitten aufgebaut ist, die jeweils auf bestimmte Fachgebiete spezialisiert sind.

6. Verfahren nach einem der vorstehenden Ansprüche, wobei das maschinelle Lernmodell (1) eine mehrsprachige Spracheingabe verarbeitet, wobei insbesondere Übersetzungsfehler und/oder Syntaxfehler erkannt und/oder kompensiert werden.

7. Verfahren nach einem der vorstehenden Ansprüche, wobei das maschinelle Lernmodell (1) den Hinweis (8) auf die erkannten semantisch relevanten Abweichungen und/oder Kontextveränderungen (7) in Form einer konkreten Handlungsempfehlung (15) für eine Erwiderung auf die semantisch relevanten Abweichungen und/oder Kontextveränderungen generiert, insbesondere durch Bewertung eines identifizierten Fehlverhaltens und Generierung einer semantisch konsistenten und/oder darauf abgestimmten Gegenargumentation (16).

8. Verfahren nach Anspruch 7, wobei die Handlungsempfehlung (15) mit einer Begründung (17) versehen ist, die sich auf die Verhandlungshistorie (3) und/oder externe Wissensdatenbank (6) stützt.

9. Verfahren nach einem der vorstehenden Ansprüche, wobei das maschinelle Lernmodell (1) unter Einhaltung datenschutzrechtlicher Bestimmungen (18), insbesondere der DSGVO, betrieben wird, und wobei die technische Umsetzung der Vertraulichkeit insbesondere folgende Maßnahmen umfasst:
Verarbeitung sämtlicher verhandlungsrelevanter Daten (3) ausschließlich auf lokal betriebenen Geräten oder in einer zertifizierten,
datenschutzrechtskonformen Cloud-Umgebung (19) mit Ende-zu-Ende-Verschlüsselung;
Einsatz von rollenbasierten Zugriffskontrollen (20) zur Beschränkung des Datenzugriffs auf berechtigte Benutzergruppen (21);
automatisierte Protokollierung (22) aller Zugriffs- und Verarbeitungsaktivitäten in einem nicht manipulierbaren Audit-Log (23) zur Nachvollziehbarkeit und Kontrolle durch autorisierte Prüfinstanzen (24);
Pseudonymisierung und/oder Anonymisierung (25) personenbezogener Daten vor Modellverarbeitung zur Minimierung der personenbezogenen Datenverwendung;
Implementierung eines Löschkonzepts mit definierten Löschfristen und technisch kontrollierbaren Datenlebenszyklen;
Verwendung technischer Schutzmaßnahmen (28) bei der Verarbeitung sensibler Informationen.

10. Verfahren nach einem der vorstehenden Ansprüche, wobei das maschinelle Lernmodell (1) so ausgebildet ist, dass es in Echtzeit während einer mündlichen Verhandlung arbeitet und laufend neue gesprochene Beiträge analysiert und, insbesondere fortlaufend oder intervallweise, Hinweise (8) auf die erkannten semantisch relevanten Abweichungen und/oder Kontextveränderungen (7) ausgibt.

11. Verfahren nach einem der vorstehenden Ansprüche, wobei der interaktive Kommunikationskontext (29) ein vertragliches, geschäftliches, juristisches und/oder gerichtliches Umfeld umfasst.

12. Verfahren nach einem der vorstehenden Ansprüche, wobei die semantisch relevanten Abweichungen und/oder Kontextveränderungen (7) Unstimmigkeiten, faktische Fehler, Täuschungsversuche und/oder strategischtaktisches Verhalten des Gegenübers umfassen.

13. Computerprogrammprodukt, umfassend Befehle, die bei der Ausführung des Programms durch einen Computer diesen veranlassen, die Schritte des Verfahrens nach einem der Ansprüche 1 bis 12 auszuführen.

14. Computerlesbarer Datenträger (31), auf dem das Computerprogrammprodukt nach Anspruch 13 gespeichert ist.

15. Computerimplementiertes System (32) zur Unterstützung mündlicher Verhandlungen in einem interaktiven Kommunikationskontext (29), umfassend:
eine Datenverarbeitungseinheit (33) mit einem maschinellen Lernmodell (2), das konfiguriert ist zur Durchführung eines Verfahrens gemäß einem der Ansprüche 1 bis 12;
mindestens eine Schnittstelle (34) zur Eingabe gesprochener Sprache (4) und zur Bereitstellung verhandlungsrelevanter Daten (3); und
eine Ausgabeeinheit (35) zur Darstellung der analysierten Informationen, insbesondere erkannter semantisch relevanter Abweichungen und/oder Kontextveränderungen (7) und Handlungsempfehlungen (15).
